# EUROPÄISCHE PATENTANMELDUNG

(11) **EP 4 056 634 A1**
(43) Veröffentlichungstag der Anmeldung: **14.09.2022**
(21) Anmeldenummer: 22159605.9
(22) Anmeldetag: 02.03.2022
(51) Int. Cl.: C08K 3/016, C08K 3/02, C08K 3/04, C08K 3/22, C08K 3/24, C08K 3/26, C08K 3/34, C08K 3/38, C08K 9/00, C08K 9/06

(54) **MIKROPORÖSE GUMMIPRODUKTE AUS HALOGEN- UND STICKSTOFF-FREIEN ELASTOMEREN MIT EINEM GEHALT AN EXPANDIERBAREM GRAPHIT**

(30) Priorität: 08.03.2021 DE 102021202220
(71) Anmelder: ContiTech Elastomer-Beschichtungen GmbH, 30165 Hannover (DE)
(72) Erfinder: Dr. Storre, Jens, 30165 Hannover (DE); Dr. Behrens, Henrik, 30165 Hannover (DE); Dr. Hubrich, Jonathan, 30165 Hannover (DE)
(74) Vertreter: Continental Corporation

(57) **Zusammenfassung**

Die vorliegende Erfindung betrifft mikroporöse Gummimaterialien auf Basis von Halogen- und Stickstoff-freien Elastomeren zur Wärmeisolierung, die expandierbaren Graphit enthalten. Derartige mikroporöse Gummimaterialien zeichnen sich durch hervorragenden Brandschutzeigenschaften aus und können trotz Basiselastomeren mit hoher Wärmefreisetzungsrate höchste Brandschutzvorgaben erfüllen, ohne dass die mechanischen Eigenschaften der Materialien hiervon wesentlich beeinträchtigt werden. Die vorliegende Erfindung betrifft weiterhin wärmeisolierende Artikel, die aus einem solchen Gummimaterial gebildet sind, Verfahren zur Herstellung solcher Gummimaterialien und wärmeisolierender Artikel und die Verwendung vom expandierbarem Graphit zur Verbesserung der Brandschutzeigenschaften von Halogen- und Stickstoff-freien Elastomeren, wobei die Elastomere innig mit dem expandierbaren Graphit vermischt bzw. compoundiert werden.

## Beschreibung

Die vorliegende Erfindung betrifft mikroporöse Gummimaterialien auf Basis von Halogen- und Stickstoff-freien Elastomeren zur Wärmeisolierung, die expandierbaren Graphit enthalten. Die vorliegende Erfindung betrifft weiterhin wärmeisolierende Artikel, die aus einem solchen Gummimaterial gebildet sind, Verfahren zur Herstellung solcher Gummimaterialien und wärmeisolierende Artikel und die Verwendung von expandierbarem Graphit zur Verbesserung der Brandschutzeigenschaften von Halogen- und Stickstoff-freien Elastomeren, wobei die Elastomere innig mit dem expandierbaren Graphit vermischt bzw. compoundiert werden.

### Stand der Technik

Artikel zur Wärmeisolierung müssen in vielen Anwendungsbereichen elastische Eigenschaften aufweisen, damit sie an die Form eines zu isolierenden Gegenstands angepasst werden können. Solche Artikel werden aus elastomeren Mischungen (bzw. Kautschukmischungen) als Basismaterial hergestellt, und haben in der Regel eine poröse Struktur mit geschlossenen Poren. Je nach Anforderung wird von diesen Materialien eine gute Witterungs-, Mineralöl- und/oder Wärmebeständigkeit erwartet. Daher enthalten solche Artikel vorzugsweise vulkanisierte Kautschukmischungen, die in den meisten Fällen auf Chloroprenkautschuk (CR), Nitrilkautschuk (NBR) oder EPDM-Kautschuk basieren. Seltener kommt auch Silikonkautschuk zum Einsatz.

Ein Nachteil dieser Materialien ist, insbesondere bei daraus gefertigten porösen Gummiartikeln, das Brandverhalten, bei dem unter anderem dichte Rauchgase entstehen. Beim Verbrennungsprozess von Elastomermischungen, die einen hohen Anteil von EPDM oder Silikon enthalten, ist die Wärmefreisetzung sehr hoch, während besonders bei auf CR oder NBR beruhenden Mischungen bei der Verbrennung für Mensch und Tier toxische Rauchgase entstehen. Aufgrund der in den letzten Jahren gestiegenen Anforderungen hinsichtlich des Brandschutzes, welche sich in der verschärften Brandschutznorm EN45545 oder DIN EN 13501-1 zeigt, ergibt sich ein erhöhter Bedarf an Brandschutz optimierten Artikeln.

Den verschärften Brandschutzanforderungen können sowohl die genannten elastomeren Mischungen auf Basis von EPDM oder Silikonkautschuk (vor allem wegen der dort geforderten maximalen Wärmefreisetzungsrate), als auch die auf CR oder NBR basierenden Elastomermischugen (wegen der geforderten Rauchgastoxizität) nicht mehr gerecht werden. Somit besteht ein Bedarf nach Isolationsmaterialien, die den gestiegenen Anforderungen an das Brandverhalten genügen.

Eine übliche Methode zur Verbesserung des Brandschutzverhaltens besteht in der direkten Einmischung von brandhemmenden Substanzen, wobei bei den erwähnten Elastomermaterialien allerdings das Problem besteht, dass eine vergleichsweise große Menge solcher Substanzen eingemischt werden muss, um die Brandeigenschaften in gewünschter Weise einzustellen. Dies führt bei den betroffenen Mischungen dann in der Regel dazu, dass sich die physikalischen, dynamischen und Wärme-isolierenden Eigenschaften in einen nicht mehr tolerablen Umfang verschlechtern. Z.B. ist die Härte für den Einsatz in dynamischen Anwendungen zu hoch oder es stellt sich eine höhere und damit ungünstigere Wärmeleitfähigkeit ein.

Beispielhaft hierfür wurde in WO 2018/033266 A1, die Hydrotalcit und Sepiolith als flammhemmende Additive in Kauschukmischungen von chlorsulfoniertem Polyethylen und Butadienkautschuk beschreibt, ein Anstieg der Shore Härte um fast 10 Einheiten beobachtet, obwohl versucht wurde, die Zugabe der flammhemmenden Additive durch einen höheren Weichmacheranteil zu kompensieren.

Bei Silikonkauschukmaterialien stellt sich zudem das Problem, dass insbesondere bei Verwendung von wasserabspaltenden Flammschutz-additiven (die hohe Zuschlagsmengen erfordern) die Vernetzung gestört werden kann.

Die Problematik der Eigenschaftsveränderung der Elastomere wird im Stand der Technik meist dadurch gelöst, dass brandverzögernde Substanzen als separate Schicht auf das Elastomermaterial aufgebracht werden. So beschreibt beispielsweise die DE 10 2013 017 570 A1 eine Beschichtung eines elastomeren Basismaterials wie Naturkautschuk oder NBR mit Ammoniumpolyphosphat und einem Bindemittel, das das Elastomer über einen Zeitraum von 5 Minuten effektiv vor Flammen schützen soll.

Die EP 2 196 492 B1 beschreibt Elastomerkörper zur Schwingungsdämpfung mit einer nicht halogenhaltigen flammhemmenden Beschichtung aus einem Bindemittel und expandierbarem Graphit, wobei die Beschichtung eine Mindestelastizität von 20 % aufweist. Der hier existierende Schichtaufbau geht von einer nach außen hin abnehmenden Elastizität aus.

Die EP 3 220 001 B1 beschreibt schwingungsdämpfende Vorrichtungen mit einer Schwingungsdämpfungsstruktur und einer Feuerschutzschicht. Die Feuerschutzschicht wird aus einer Mischung von Chloroprenkautschuk als Basismaterial gebildet, das mit 10 bis 300 Teilen an wasserabspaltenden Metallhydraten (Aluminumtrihydrat oder Magnesiumhydroxid) sowie gegebenenfalls weiteren Additiven formuliert wird.

Gemeinsam ist diesen Ansätzen, dass der Schutz in erster Linie in äußeren Schichten bereitgestellt wird. Dies hat den Nachteil, dass es bei intensiven Brandereignissen bei mehrschichtigen Grundkörpern zum Schmelzen innenliegender Festigkeitsträger kommen kann, die sowohl eine starke Energiefreisetzung bei der Entzündung auslösen, als auch zu einem Funktionsverlust führen. Daher besteht ein Bedarf für poröse wärmeisolierende Gummimaterialien, die den erhöhten Anforderungen an den Brandschutz genügen ohne dass die physikalischen Eigenschaften in einem ungünstigen Ausmaß beeinträchtigt werden. Insbesondere besteht ein Bedarf für poröse Gummimaterialien, die auch bei höheren Einsatztemperaturen z.B. im Bereich von 150 bis 250°C eingesetzt werden können. Die vorliegende Erfindung befasst sich mit diesem Bedarf.

### Detaillierte Beschreibung

Im Rahmen der dieser Erfindung zugrundeliegenden Untersuchungen wurde überraschend gefunden, dass sich sehr gute Brandeigenschaften durch ein wie in Anspruch 1 angegebenes Gummimaterial realisieren lassen. Bevorzugte Ausgestaltungen solcher Gummimaterialien sind in den abhängigen Ansprüchen 2 bis 7 angegeben.

Demzufolge betrifft die vorliegende Erfindung in einem ersten Aspekt ein mikroporöses Gummimaterial auf Basis eines Halogen- und Stickstoff-freien Elastomers zur Wärmeisolierung mit einem Gehalt an expandierbarem Graphit. Durch das Halogen- und Stickstoff-freie Elastomer wird erreicht, dass der Gehalt von toxischen Substanzen, die bei der Verbrennung des Material in Rauchgasen entstehen (z.B. in Form von Halogenwasserstoff oder HCN), minimiert wird. Expandierbarer Graphit enthält als flammhemmendes Mittel ebenfalls weder Stickstoff noch Halogene, die in Rauchgasen toxische Subtanzen bilden können.

Im mikroporösen Gummimaterial ist der expandierbare Graphit im Wesentlichen homogen und in fein verteilter Form enthalten, d.h. das erfinderische Konzept besteht dezidiert nicht in der Bereitstellung einer Beschichtung des mikroporösen Gummimaterials mit dem expandierbaren Graphit, sondern zielt darauf auf, dass Anteile von expandierbarem Graphit im gesamten Volumen des mikroporösen Gummimaterials enthalten sind, und so die flammhemmende Wirkung des expandierbarem Graphit über das gesamte Volumen des Gummimaterials wirksam ist (bzw. im Verlauf eines Brandes über die gesamte Materialstärke die flammhemmende Wirkung nachgeliefert werden kann).

Im Folgenden werden die Begriffe "Elastomer", "elastomeres Material" und "Kautschuk" mit synonymer Bedeutung verwendet.

Die Angabe "mikroporös" bezeichnet im Kontext der vorliegenden Erfindung den Umstand, dass das Gummimaterial nicht kompakt ausgebildet ist, sondern Hohlräume mit darin enthaltenem Gas aufweist, über die die Wärme-isolierende Wirkung des Materials verstärkt wird. Bevorzugt handelt es sich bei den Hohlräumen um geschlossenzellige Poren. Weiterhin ist es im Kontext der vorliegenden Erfindung bevorzugt, wenn die Poren des Gummimaterials eine mittlere Porengröße (bestimmt mikroskopisch anhand eines Querschnitts durch das Material und Mittelwertbildung der bestimmten maximalen Porendurchmesser der Poren) von 150 µm oder weniger, bevorzugt 100 µm oder weniger und weiter bevorzugt 50 µm oder weniger und noch weiter bevorzugt 2 µm oder weniger oder sogar Bereich von 0,5 bis 2 µm aufweisen, wobei eine möglichst geringe Porengröße wegen der besseren Wärmeisolationseigenschaften bevorzugt ist.

Die Angabe "Halogen- und Stickstoff-frei" bedeutet in dieser Anmeldung, dass die bezeichneten Elastomere keine Halogen- und Stickstoffatome als Bestandteil der Wiederholungseinheiten des Elastomers enthalten, schießt aber nicht aus, dass die Elastomere Halogen- und Stickstoffatome in für Verunreinigungen typischen Mengen beinhalten.

Der expandierbare Graphit erfüllt im Kontext der hier beschriebenen Erfindung die Aufgabe, dass sich das Material bei Hitzeeinwirkung aufbläht und durch das gebildete größere Volumen das restliche Gummimaterial besser von der durch Flammen einwirkenden Hitze vor der Entflammung schützt; dadurch wird der Entzündungszeitpunkt des tiefer liegenden Material verzögert.

Die Angabe "auf Basis" bezeichnet in der vorliegenden Anmeldung den Umstand, dass die wesentlichen elastomeren Eigenschaften im erfindungsgemäßen mikroporösen Gummimaterial durch dieses Elastomersystem vermittelt werden, was in der Regel der Fall ist, wenn mindestens 30 Gew.-%, bevorzugt mindestens 40 Gew.-%, weiter bevorzugt mindestens 50 Gew.-%, noch weiter bevorzugt mindestens 70 Gew.-% und noch weiter bevorzugt mindestens 90 Gew.-% Gummi oder Elastomermaterial durch das angegebene Elastomersystem bereitgestellt werden. D.h. der zu 100% fehlende Anteil kann durch andere Inhaltsstoffe bereitgestellt werden, wobei es zweckmäßig ist, wenn die in dem Gummimaterial verwendeten Inhaltsstoffe soweit miteinander kompatibel sind, dass eine hinreichend homogene Elastomermischung erzeugt werden kann. In einigen Fällen kann es zweckmäßig sein, wenn der Elastomeranteil des mikroporösen Gummimaterials ausschließlich aus den angegebenen Elastomeren gebildet ist.

Der besondere Vorteil der erfindungsgemäßen Zusammensetzungen tritt dann zutage, wenn als Basiselastomer des mikroporösen Gummimaterials ein Elastomer verwendet wird, dass ohne Zusatz an flammhemmenden Substanzen im Brandfall eine hohe Wärmefreisetzungsrate aufweist. Elastomere, bei denen dies der Fall ist, sind insbesondere Silikonelastomere und Ethylen-Propylen-Dien-Elastomere (EPDM), so dass es bevorzugt ist, wenn das Halogen- und Stickstoff-freie Elastomer in Form von Silikon- oder Ethylen-Propylen-Dien-Kautschuk vorliegt. Ganz besonders bevorzugt ist es, wenn das Halogen- und Stickstoff-freie Elastomer in Form von Silikon-Kautschuk vorliegt und noch weiter bevorzugt ist es, wenn das in dem mikroporösen Gummimaterial enthaltene elastomere Material zu mindestens 80 Gew.-% und insbesondere 100 Gew.-% aus Silikon-Kautschuk besteht.

Der Gehalt an expandierbarem Graphit in dem mikroporösen Gummimaterial unterliegt keine relevanten Beschränkungen, mit der Maßgabe, dass der Gehalt zu Vermittlung des gewünschten brandverzögernden Effekts geeignet ist, und die elastischen Eigenschaften des Elastomermaterials nicht über Gebühr zu beeinträchtigt. Als günstig hat sich in diesem Zusammenhang ein Anteil im Bereich von 1 bis 100 Teile pro 100 Teile Kautschuk (auch als "phr" bezeichnet) und insbesondere 5 bis 50 Teile pro 100 Teile Kautschuk herausgestellt. Ganz besonders bevorzugt ist ein Anteil im Bereich von 10 bis 40 Teilen und insbesondere 10 bis 20 Teilen pro 100 Teile Kautschuk. "Kautschuk" bezeichnet hier die Gesamtheit der in dem mikroporösen Gummimaterial enthaltenen Elastomere.

Der in den erfindungsgemäßen mikroporösen Gummimischungen verwendete expandierbare Graphit weist bevorzugt eine Onset-Temperatur (d.h. Temperatur, bei der die Expansion des Graphits einsetzt) von mindestens 160°C, wobei höhere Onset-Temperaturen, wie beispielsweise mindestens 200°C und insbesondere mindestens 220°C besonders bevorzugt sind. Die Verwendung von expandierbarem Graphit mit einer hohen Onset-Temperatur ist vorteilhaft, da ein derartiger expandierbarer Graphit während eines Vulkanisierungsprozesses der in das Material einbezogenen Elastomere nicht expandiert. In der Praxis werden Elastomere oft bei höheren Vulkanisationstemperaturen umgesetzt, da die Vulkanisations-geschwindigkeit mit steigender Temperatur stark ansteigt. Als Daumenregel, die in vielen aber natürlich nicht allen Fällen stimmt, gilt, dass eine Erhöhung der Vulkanisationstemperatur um 10°C in etwa eine Verdoppelung der Vulkanisationsgeschwindigkeit bewirkt. Höhere Vulkanisationstemperaturen ermöglichen daher eine schnellere und damit preisgünstigere Fertigung. Ein geeigneter Graphit für die bevorzugte Ausführungsform der Erfindung ist daher beispielsweise ein mit Schwefelsäure behandelter Graphit, der eine Onset-Temperatur von etwa 220 bis 250°C besitzt. Denkbar ist auch die Verwendung von expandierbaren Graphiten, die flüchtige, organische Säuren wie z. B. Essigsäure oder anorganische Säuren wie z.B. Salpetersäure enthalten und über niedrigere Onset-Temperaturen als auf Schwefelsäure basierende expandierbare Graphite verfügen.

Im Zusammenhang mit der vorliegenden Erfindung hat sich ergeben, dass mit expandierbarem Graphit einer mittleren Partikelgröße von 100 µm bis 800 µm, vorzugsweise von 180 µm bis 500 µm, besonders gute Ergebnisse erzielt werden können, da diese expandierbaren Graphite mit steigender Partikelgröße über höhere Expansionsvolumina verfügen, die im Brandfall für die Ausbildung einer ausreichend isolierenden Dämmschicht begünstigt. Expandierbare Graphite mit einer mittleren Partikelgröße oberhalb von 500 µm weisen die höchsten Expansionsvolumina auf, sind aber kommerziell schwieriger zu erwerben und liegen preislich deutlich höher als Standardtypen mit Teilchengrößen von 80% > 300 µm. Neben dem expandierbaren Graphit ist es von Vorteil, wenn flammhemmende Additive, die beim Erhitzen Wasser abspalten, in die mikroporösen Gummimischungen einbezogen werden, was eine Reduzierung der Menge an expandierbarem Graphit erlaubt. Als bevorzugte Additive sind hier zu Beispiel Aluminiumtrihydroxyid, Magnesiumhydroxid oder Calciumhydroxid zu nennen. Ein besonders bevorzugtes mikroporöses Gummimaterial enthält zusätzlich Aluminiumtrihydroxid und/oder Magnesiumhydroxid und bevorzugt Oberflächen-modifiziertes Aluminiumtrihydroxid und/oder Oberflächen-modifiziertes Magnesiumhydroxid. In Oberflächen-modifiziertem Aluminiumtrihydroxid oder Magnesiumhydroxid ist die Oberfläche z.B. mit Alkyl- und bevorzugt mit Vinylsilanen modifiziert. Durch die Modifikation mit Alkylsilanen kann dem Additiv eine verbesserte Kompatibilität mit einem Silikon-Kautschuk vermittelt werden, während bei einem Vinylsilan im Rahmen eine Vulkanisierung eine Anbindung der Modifikation an den Kautschuk ermöglicht wird.

Der Gehalt an Aluminiumtrihydroxid und/oder Magnesiumhydroxid in dem mikroporösen Gummimaterial ist zweckmäßig so einzustellen, dass sich durch den Einbezug dieser Materialien keine wesentliche Veränderung der physikalischen Eigenschaften der Mischung ergibt. Als günstig kann hierbei ein Gehalt an Aluminiumtrihydroxid und/oder Magnesiumhydroxid im Bereich von 10 Teilen (pro 100 Teile Kautschuk) bis zu einem Gehalt im Bereich von 80 Teilen (pro 100 Teile Kautschuk), bevorzugt ein Bereich von 12 bis 60 Teilen (pro 100 Teile Kautschuk), weiter bevorzugt von 15 bis 50 Teilen (pro 100 Teile Kautschuk) und noch weiter bevorzugt von etwa 17 bis 40 Teilen (pro 100 Teile Kautschuk) angegeben werden.

Für mikroporöse Gummimaterialen, die sowohl expandierbaren Graphit und ein oder mehrere Wasser abspaltende flammhemmende Additive enthalten ist es bevorzugt, wenn diese in einem möglichst ausgewogenen Verhältnis zueinander vorliegen. Bevorzugt ist demzufolge ein Gewichtsverhältnis dieser Komponenten im Bereich von etwa 2:1 bis 1:2, weiter bevorzugt etwa 1,5:1 bis 1:1,5, und noch weiter bevorzugt etwa 1,2:1 bis 1:1,2.

Neben Wasser-abspaltenden flammhemmenden Additiven kann das erfindungsgemäße mikroporöse Gummimaterial weitere übliche Flammschutzadditive enthalten, die vorzugsweise jedoch in ihrer brandunterdrückenden Bedeutung für das Gummimaterial untergeordnet sind und nur in geringen Anteilen darin enthalten sind (z.B. 10 Gew.-% oder weniger und insbesondere 5 Gew.-% oder weniger bezogen auf das Gesamtgewicht der in dem mikroporösen Gummimaterial enthaltenen Flammschutz- und flammhemmenden Additive). Als hierbei verwendbare weitere Flammschutzadditive sind hierbei insbesondere Flammschutzmittel auf Stickstoff-Phosphor-Basis, Montmorillonit-Ton, Hydrotalcit, Sepiolith, Stannate, bevorzugt in Form von Zinkstannat oder Zinkhydroxystannat, Cyanurate, bevorzugt in Form von Melamincyanurat, Borate, bevorzugt in Form von Zinkborat, phosphorhaltige Komponenten, bevorzugt in Form von Resorcinoldiphosphat oder aromatischen Polyphosphaten, stickstoffhaltige Komponenten, bevorzugt in Form von Ammoniumphosphat oder Ammoniumpolyphosphat, Carbonate, bevorzugt in Form von Calciumcarbonat oder Magnesiumcarbonat, und roter Phosphor zu nennen. Weitere in den erfindungsgemäßen Gummimaterialien verwendbare Flammschutzadditive sind in [0042] der DE 10 2013 017 570 A1 beschrieben, auf die hier Bezug genommen werden soll. Wenn es sich beim Stickstoff-freien Elastomer um einen Silikonkautschuk handelt, sind als weitere Flammschutzadditive insbesondere Montmorillonit-Ton, Hydrotalcit, Sepiolith, Borate, bevorzugt in Form von Zinkborat, Carbonate, bevorzugt in Form von Calciumcarbonat oder Magnesiumcarbonat, und roter Phosphor einsetzbar.

Neben den im Vorstehenden beschriebenen Zusätzen kann das erfindungsgemäße mikroporöse Gummimaterial weitere übliche Additive und Zusätze enthalten, die dem Fachmann geläufig sind, z.B. in Form von organischen Farbstoffen, wie Phthalocyaninen, oder anorganischen Farbpigmenten, wie TiO₂, Cr₂O₃ oder Fe₂O₃. Falls solche Farbstoffe oder Farbpigmente in dem Gummimaterial enthalten sind ist eine Zusatzmenge von 0,1% bis 5%, jeweils bezogen auf das Gesamtgewicht des mikroporösen Gummimaterial, in aller Regel ausreichend um die gewünschte Färbung einzustellen.

Weiterhin kann das mikroporöse Gummimaterial ein thermochromes Material enthalten, das durch einen Farbumschlag anzeigt, dass das Elastomer hohen Betriebstemperaturen ausgesetzt war. Ein solches thermochromes Material kann beispielsweise in Mengen von 0,1% bis 5%, jeweils bezogen auf das Gesamtgewicht des mikroporösen Gummimaterials, eingesetzt werden.

Ein im Kontext der hier beschriebenen Erfindung ganz besonders bevorzugtes mikroporöses Gummimaterial enthält Silikonkautschuk als Basis, 5 bis 50 Teile pro 100 Teile Kautschuk expandierbaren Graphit, und 10 bis 60 Teile pro 100 Teile Kautschuk Aluminiumtrihydroxid und/oder Magnesiumhydroxid, bevorzugt in Oberflächen modifizierter Form, und ggf. bis zu 30 Teile pro 100 Teile Kautschuk an weiteren Flammschutzadditiven.

Der Anteil an Hohlräumen in dem mikroporösen Gummimaterial der vorliegenden Erfindung ist bevorzugt so bemessen, dass sich eine Dichte des Gummimaterials im Bereich von 200 bis 850 kg/m³ ergibt, wobei ein Bereich von 350 bis 750 kg/m³ als weiter bevorzugt und eine Dichte im Bereich von 450 bis 650 kg/m³ als noch weiter bevorzugt angegeben werden kann.

Ein weiterer Aspekt der vorliegenden Erfindung betrifft einen wärmeisolierenden Artikel, der anteilsmäßig oder vollständig aus einem mikroporösen Gummimaterial, wie vorstehend beschrieben, gebildet ist. Bevorzugt ist dieser wärmeisolierende Artikel einschichtig ausgeführt, d.h. dass der Artikel aus einer kontinuierlichen Schicht des mikroporösen Gummimaterials gebildet ist.

Eine bevorzugte Anwendung von solchen wärmeisolierenden Artikeln liegt im Bereich der Isolierung von Rohren, Rohrverbindern oder Rohranbauteilen, so dass der wärmeisolierende Artikel bevorzugt in Form einer Rohrisolierung oder als Isolier-Formteil vorliegt. In einer Rohrisolierung weist der Artikel eine schlauchförmige Form mit einem runden durchgehenden Hohlraum auf, in den ein Rohr eingefügt werden kann. Beispielhaft kann eine solche Rohrisolierung einen Außendurchmesser von etwa 43 mm, einen Innendurchmesser von etwa 22 mm und eine Wandstärke von etwa 10 mm aufweisen, wobei andere Dimensionierungen ohne weiteres möglich sind.

Ein ganz besonders bevorzugter wärmeisolierender Artikel weist eine Klassifizierung des Brandverhaltens gemäß DIN EN 13501-1 (2019) von B_{L}-s1, d0 auf.

Ein weiterer Aspekt der vorliegenden Erfindung betrifft ein Verfahren zur Herstellung eines mikroporösen Gummimaterials, z.B. wie vorstehend beschrieben, oder eines wärmeisolierenden Artikels, z.B. wie vorstehend beschrieben, das die folgenden Schritte umfasst:
(i) Herstellung einer Mischung eines Halogen- und Stickstoff-freien Elastomers mit expandierbarem Graphit und gegebenenfalls weiteren Additiven;
(ii) Verarbeitung der Mischung, gegebenenfalls unter Ausbildung von Mikroporen; und gegebenenfalls
(iii) Formen der Mischung zur einem Artikel.

Das Mischen des Halogen- und Stickstoff-freien Elastomers mit dem expandierbaren Graphit erfolgt zweckmäßig unter Einsatz von zur Elastomerherstellung üblicherweise verwendeten Aggregaten (z.B. Innenmischer, Walzwerk, Kalander, Extruder).

Zweckmäßig wird das Elastomer in der Verarbeitung in (ii) oder danach vulkanisiert, wobei die Vulkanisation bei der Herstellung eines Artikels regelmäßig nach dem Formen in (iii) erfolgt.

Ein noch weiterer Aspekt der vorliegenden Erfindung betrifft die Verwendung von expandierbarem Graphit zur Verbesserung der Brandschutzeigenschaften von Halogen- und Stickstoff-freien Elastomeren, wobei die Verwendung das Compoundieren der Elastomere mit dem expandierbaren Graphit umfasst. Im Rahmen dieser Verwendung handelt es sich bei den Halogen- und Stickstoff-freien Elastomeren bevorzugt von Silikonelastomere. Hierzu ist es weiter bevorzugt, wenn im Rahmen des Compoundierens weiterhin Aluminiumtrihydroxid und/oder Magnesiumhydroxid in das Halogen- und Stickstoff-freie Elastomer einbezogen wird.

Für die vorstehende Schilderung der Erfindung gilt, dass Ausführungsformen und Merkmale, die für einen der Aspekte als bevorzugt, günstig oder vorteilhaft beschrieben werden, ebenso als bevorzugt, günstig oder vorteilhaft für die anderen Aspekte gelten, soweit dies nicht zu offensichtlichen Widersprüchen führt. Diese Kombinationen gelten in der vorstehenden Beschreibung als offenbart, auch wenn nicht alle Kombinationen explizit aufgeführt sind.

Im Folgenden wird die vorliegende Erfindung anhand eines Ausführungsbeispiels näher erläutert, das jedoch nicht in irgendeiner Weise als beschränkend für den Schutzumfang der Anmeldung angesehen werden sollte.

### Beispiel 1:

Es wurde eine poröse Silikonschaum-Rohrisolierung mit einem Silikonkautschuk und einem Anteil an 10-40 phr expandierbarem Graphit, 10-40 phr oberflächen-modifiziertem Al(OH)₃ und 5-20 phr Mg(OH)₂ hergestellt. Diese Rohrisolierung hatte folgende Dimensionen: Wandstärke 10 -1/+2 mm; Außendurchmesser: 43,3 ± 4,5 mm; von Innendurchmesser 22,3 -1/+2; Dichte 520 ± 50 kg/m3.

Die so erhaltene Rohrisolierung wurde Brandschutztests nach DIN EN ISO 11925-2 und DIN EN 13823 unterzogen. Die Ergebnisse dieser Tests sind in der folgenden Tabelle 1 angegeben:

**Tabelle 1:**

| **Prüfverfahren und Prüfnummer** | **Parameter** | **Anzahl der Prüfungen** | **Ergebnisse** | |
|---|---|---|---|---|
| | | | **stetige Parameter Mittelwert (m)** | **diskrete Parameter** |
| DIN EN ISO 11925-2 | Fs ≤ 150 mm | 12 | (-) | übereinstimmend |
| | Kein brennendes Abtropfen/Abfallen | | (-) | übereinstimmend |
| DIN EN 13823 | FIGRA_{0,2 MJ} [W/s] | 3 | 116 | (-) |
| | FIGRA_{0,4 MJ} [W/s] | | 116 | (-) |
| | THR₆₀₀ₛ [MJ] | | 6,8 | (-) |
| | SMOGRA [m²/s²] | | 25 | (-) |
| | TSP₆₀₀ₛ[m²] | | 168 | (-) |
| | keine seitliche Flammenausbreitung (LFS) bis an die Kante der Probe | | (-) | übereinstimmend |
| | Kein brennendes Abtropfen/Abfallen | | (-) | übereinstimmend |
| | Kein brennendes Abtropfen/Abfallen, > 10 s | | (-) | übereinstimmend |

| | | | | |
|---|---|---|---|---|
| (-) nicht anwendbar. | | | | |

Auf Basis dieser Ergebnisse erfolgte eine Klassifizierung nach DIN EN 13501-1 (2019) wie folgt:
Brandverhalten: B_{L}
Klassifizierung in Bezug zur Rauchentwicklung: s1
Klassifizierung in Bezug auf das brennende Abtropfen/Abfallen: d0

### Beispiel 2:

Es wurden verschiedene Formkörper von mikroporösen Gummimaterialen gemäß den in der folgenden Tabelle 2 angegebenen Rezepturen hergestellt. Die wichtigsten mechanischen Eigenschaften dieser Produkte und die jeweils dafür bestimmte Brandklasse sind ebenfalls in Tabelle 2 angegeben:

**Tabelle 2:**

| | Vergleich | 1 | 2 | 3 | 4 | 5 |
|---|---|---|---|---|---|---|
| Silikonkautschuk | 100 | 100 | 100 | 100 | 100 | 100 |
| Metallhydroxid (in phr) | 0 | 25 | 25 | 14,5 | 21,0 | 17,0 |
| Expandierbarer Graphit (in phr) | 0 | 10 | 18,5 | 23,89 | 17,5 | 15,0 |
| Dichte des Produkts | 0,40 | 0,58 | 0,63 | 0,55 | 0,52 | 0,50 |
| Dehnung¹ | 165/127 | 31/25 | 3/9 | 15/14 | 50/39 | 62/56 |
| Festigkeit¹ | 0,7/0,5 | 0,5/0,5 | 0,3/0,5 | 0,6/0,7 | 0,6/0,5 | 0,6/0,5 |
| Weiterreißfestigkeit² | 2,3 | 0,7 | 0,2 | 0,3 | 1,0 | 1,3 |
| Erreichbare Brandklasse | D_{L}, S2, d0 | C_{L}, S1, d0 | B_{L}, S1, d0 | B_{L}, S1, d0 | B_{L}, S1, d0 | B_{L}, S1, d0 |

| | | | | | | |
|---|---|---|---|---|---|---|
| ¹ = bestimmt gemäß DIN 53504; 2 = bestimmt gemäß DIN ISO 34-1; von den Normen abweichend wurden die Messungen mit Körpern einer Materialstärke von 10 mm durchgeführt. | | | | | | |

Wie aus Tabelle 2 ersichtlich ist verbessert sich die Brandklasse bei Zusatz von Metallhydroxid und expandierbarem Graphit erheblich, wobei sich die Dichte des Materials durch eine geringere Porosität einerseits und den Gehalt an anorganischen Bestandteilen allerdings leicht erhöht. Höhere Anteile an Metallhydroxid und expandierbarem Graphit wirken sich auch auf die Dehnungs- und Weiterreißfestigkeitseigenschaften aus. Eine Annäherung der mechanischen Eigenschaften an die Eigenschaften des Formkörpers ohne Metallhydroxid und expandierbaren Graphit konnte bei etwa ausgeglichenen Verhältnissen von Metallhydroxid und expandierbarem Graphit erreicht werden (Proben 4 und 5).

Zur Erreichen der Brandklasse B_{L}, S1, d0 nur mit Metallhydroxid waren sehr hohe Mengen erforderlich, mit denen keine akzeptablen mechanischen Eigenschaften mehr realisiert werden konnten (nicht gezeigt). Zudem zeigten sich bei der Herstellung der Formkörper Probleme der Mischbarkeit und Verarbeitbarkeit, wenn höhere Mengen an flammhemmenden Additiven in den Silikonkautschuk einbezogen wurden.

## Patentansprüche

1. Mikroporöses Gummimaterial auf Basis eines Halogen- und Stickstoff-freien Elastomers zur Wärmeisolierung mit einem Gehalt an expandierbarem Graphit.

2. Mikroporöses Gummimaterial gemäß Anspruch 1, wobei das Halogen- und Stickstoff-freie Elastomer in Form von Silikon- oder Ethylen-Propylen-Dien-Kautschuk und bevorzugt in Form von Silikon-Kautschuk vorliegt.

3. Mikroporöses Gummimaterial gemäß Anspruch 1 oder 2, wobei der Gehalt an expandierbarem Graphit im Bereich von 1 bis 100 Teilen pro hundert Teile Kautschuk, bevorzugt 5 bis 50 Teile pro hundert Teile Kautschuk und besonders bevorzugt bei 10 bis 40 Teile pro hundert Teile Kautschuk liegt.

4. Mikroporöses Gummimaterial gemäß einem der Ansprüche 1 bis 3, wobei der expandierbare Graphit eine Onset-Temperatur von mindestens 160°C, bevorzugt mehr als 200°C und weiter bevorzugt mehr als 220°C aufweist.

5. Mikroporöses Gummimaterial gemäß mindestens einem der vorstehenden Ansprüche, das zusätzlich Aluminiumtrihydroxid und/oder Magnesiumhydroxid und bevorzugt Oberflächen-modifiziertes Aluminiumtrihydroxid und/oder Oberflächen-modifiziertes Magnesiumhydroxid enthält.

6. Mikroporöses Gummimaterial gemäß Anspruch 5, das einen Gehalt an Aluminiumtrihydroxid und/oder Magnesiumhydroxid im Bereich von 10-60 Teile pro hundert Teile Kautschuk aufweist.

7. Mikroporöses Gummimaterial gemäß Anspruch 5 oder 6, wobei das Gewichtsverhältnis von expandierbarem Graphit und Aluminiumtrihydroxid und/oder Magnesiumhydroxid im Bereich von 2:1 bis 1:2, bevorzugt 1,5: 1 bis 1: 1,5 und weitere bevorzugt 1,2:1 bis 1: 1,2 liegt.

8. Mikroporöses Gummimaterial gemäß mindestens einem der vorstehenden Ansprüche, zusätzlich enthaltend mindestens ein weiteres Flammschutzadditiv, das vorzugsweise ausgewählt ist aus der Gruppe umfassend Flammschutzmittel auf Montmorillonit-Ton, Hydrotalcit, Sepiolith, Stannate, bevorzugt in Form von Zinkstannat oder Zinkhydroxystannat, Borate, bevorzugt in Form von Zinkborat, Carbonate, bevorzugt in Form von Calciumcarbonat oder Magnesiumcarbonat, und rotem Phosphor.

9. Wärmeisolierender Artikel umfassend ein mikroporöses Gummimaterial nach einem der Ansprüche 1 bis 8.

10. Wärmeisolierender Artikel gemäß Anspruch 9, wobei der wärmeisolierende Artikel einschichtig ausgeführt ist.

11. Wärmeisolierender Artikel gemäß Anspruch 9 oder 10, der in Form einer Rohrisolierung oder als Isolier-Formteil vorliegt.

12. Wärmeisolierender Artikel gemäß einem der Ansprüche 9 bis 11 mit einer BL-s1, d0 Klassifizierung für Schlauchanwendungen oder B-s2, d0 Klassifizierung für flächige Produkte/Formteile, jeweils für das Brandverhalten gemäß DIN EN 13501-1 (2019).

13. Verfahren zur Herstellung eines mikroporösen Gummimaterials, insbesondere nach einem der Ansprüche 1 bis 8, oder eines wärmeisolierenden Artikels, insbesondere nach einem der Ansprüche 9 bis 11, umfassend:
(i) Herstellung einer Mischung eines Halogen- und Stickstoff-freien Elastomers mit expandierbarem Graphit und gegebenenfalls weiteren Additiven;
(ii) Verarbeitung der Mischung, gegebenenfalls unter Ausbildung von Mikroporen; und gegebenenfalls
(iii) Formen der Mischung zur einem Artikel.

14. Verwendung von expandierbarem Graphit zur Verbesserung der Brandschutzeigenschaften von Halogen- und Stickstoff-freien Elastomeren, bevorzugt von Silikonelastomeren, umfassend das Compoundieren der Elastomere mit dem expandierbarem Graphit.

15. Verwendung nach Anspruch 14, wobei im Rahmen des Compoundierens weiterhin Aluminiumtrihydroxid und/oder Magnesiumhydroxid in das Halogen- und Stickstoff-freie Elastomer einbezogen wird.
